# EUROPÄISCHE PATENTSCHRIFT

(11) **EP 2 572 415 B1**
(45) Veröffentlichungstag und Bekanntmachung des Hinweises auf die Patenterteilung: **03.09.2014**
(21) Anmeldenummer: 11720300.0
(22) Anmeldetag: 19.05.2011
(51) Int. Cl.: H02B 1/38, E05B 63/04, E05D 15/50, E05B 7/00, E05C 9/04, E05B 1/00

(54) **TÜRANORDNUNG FÜR EINEN GERÄTESCHRANK UND VERFAHREN ZUM ÄNDERN EINER ANSCHLAGSSEITE EINER TÜRANORDNUNG**
DOOR ASSEMBLY FOR AN INSTRUMENT CABINET AND METHOD FOR CHANGING A STOP SIDE OF A DOOR ASSEMBLY
AGENCEMENT DE PORTE POUR UNE ARMOIRE D'APPAREILS ET PROCÉDÉ POUR INVERSER LE SENS D'OUVERTURE DE PORTE

(30) Priorität: 10.11.2010 DE 102010050965; 21.05.2010 DE 102010021166
(43) Veröffentlichungstag der Anmeldung: 27.03.2013
(73) Patentinhaber: Fujitsu Technology Solutions Intellectual Property GmbH, 80807 München (DE)
(72) Erfinder: KOBERLING, Toni, 82166 Gräfelfing (DE)
(74) Vertreter: Epping - Hermann - Fischer
(86) Internationale Anmeldenummer: PCT/EP2011/058188
(87) Internationale Veröffentlichungsnummer: WO 2011/144708

(56) Entgegenhaltungen:
- EP-A1- 0 891 027
- EP-A1- 1 274 158
- DE-A1-102007 012 980
- DE-U1- 20 216 744
- US-A1- 2003 080 567

## Beschreibung

Die Erfindung betrifft eine Türanordnung für einen Geräteschrank. Die Fronttür eines 19" Racks soll alternativ rechts oder links angeschlagen sein. Der Kunde soll gemäß seiner Gegebenheiten entscheiden, welche Anschlagseite für ihn die bessere ist und in der Lage sein, diese möglichst einfach durch Umrüsten zu realisieren.

Eine Lösung ist es, die Tür um 180° zu drehen (auf den Kopf zu stellen) und dadurch die Anschlagseite zu ändern. Ein Nachteil daran ist, dass das gesamte Design auf dem Kopf steht (Logos, Designelemente). Außerdem erfordert diese Lösung auch für sämtliche Funktionselemente, wie Griff und Schloss, einen symmetrischen Aufbau der Tür.

Eine andere Lösung ist es, die Tür in ihrer Orientierung zu belassen und sämtliche Funktionen (Scharniere, Griffe u. Öffner, Schloss) umzumontieren (Seitentausch). Diese Lösung ist verhältnismäßig aufwändig.

Aus der DE 10 2007 012980 A1 ist eine Türanordnung zum Verschließen einer Gehäuseöffnung mit einem an einer ersten Anschlagseite des Türblatts ausgebildeten ersten Scharnier und einem der ersten Anschlagseite gegenüberliegende, zweite Anschlagseite bekannt, an der ein zweites Scharnier ausgebildet ist. Mittels eines Betätigungselements mit den drei Betätigungsstellungen "Geschlossen", "Öffnen des ersten Anschlags" und "Öffnen des zweiten Anschlags" können die ersten und zweiten Scharniere zusammen mit dem Betätigungselement einen Schließmechanismus bilden, der je nach Betätigungsstellung des Betätigungselements an einer oder beiden Anschlagseiten des Türblatts ein Scharnier oder einen Verschluss bilden.

Gemäß einer ersten Ausgestaltung der Erfindung umfasst eine Türanordnung für einen Geräteschrank oder dergleichen ein Türelement zum Einbau in einer vorbestimmten Orientierung mit einer ersten Seitenkante und einer der ersten Seitenkante gegenüberliegenden zweiten Seitenkante. Die Türanordnung umfasst des Weiteren wenigstens zwei erste, zurückziehbare Bolzen im Bereich der ersten Seitenkante und wenigstens zwei zweite, eine Schwenkachse bildende Bolzen im Bereich der zweiten Seitenkante, wobei die ersten Bolzen in einem ausgefahrenen Zustand mit einer Vertiefung des Geräteschranks in Verbindung stehen, um ein Schwenken der Tür um die Schwenkachse zu verhindern und in einem zurückgezogenen Zustand aus der ersten Vertiefung heraustreten, um ein Schwenken der Tür um die Schwenkachse zu gestatten. Die Türanordnung umfasst des Weiteren wenigstens ein Griffelement mit einem feststehenden Teil zur Befestigung an einer Vorderseite des Türelements und einem beweglichen Teil zur mechanischen Kopplung mit den zwei ersten Bolzen, wobei durch Betätigen des beweglichen Teils die damit gekoppelten ersten Bolzen in den eingefahrenen Zustand bewegbar sind und wobei das Türelement und/oder das Griffelement symmetrisch ausgestaltet sind, sodass durch Lösen, Drehen um 180° und Befestigen des gedrehten Griffelementes Funktionselemente eines Schließmechanismus der Türanordnung von der ersten Seitenkante an die zweite Seitenkante vertauscht werden können und umgekehrt.

Durch das Vorsehen eines bezüglich einer Drehung symmetrischen Griffelementes können Funktionselemente der Türanordnung auf verhältnismäßig einfache Weise von einer Seitenkante zu der anderen Seitenkante vertauscht werden. Insbesondere ist es möglich, den beweglichen Teil des Griffelements von links nach rechts zu vertauschen und damit auch ein Vertauschen eines Schließmechanismus von links nach rechts zu vereinfachen.

Gemäß einer vorteilhaften Ausgestaltung sind die zwei ersten Bolzen und die zwei zweiten Bolzen über Befestigungsmittel lösbar mit dem Türelement verbunden, wobei die Befestigungsmittel so ausgestaltet sind, dass die zwei ersten Bolzen mit den zwei zweiten Bolzen vertauschbar sind, um einen Wechsel der Schwenkachse von der ersten Seitenkante an die zweiten Seitenkante zu bewirken.

Gemäß einer weiteren Ausgestaltung der vorliegenden Erfindung wird vorgeschlagen, auf beiden Seiten eines Türelementes zurückziehbare Scharnierbolzen fest zu montieren. Wenigstens ein Griffelement mit einem feststehenden Teil und einem beweglichen Teil ist an einer Vorderseite des Türelementes befestigt. Der feststehende Teil des Griffelementes dient im Wesentlichen als Griff zum Halten beziehungsweise Ziehen der Tür. Der bewegliche Teil dient zudem als Schloss beziehungsweise Klinke und ermöglicht ein Zurückziehen der zugeordneten Scharnierbolzen im Bereich entweder der linken oder der rechten Kante des Türelementes. Zum Ändern der Anschlagrichtung ist das Türelement und/oder das Griffelement symmetrisch ausgestaltet, sodass durch Lösen, Drehen um 180° und Befestigen des gedrehten Griffelementes die Anschlagseite der Türanordnung von links nach rechts oder umgekehrt vertauscht werden kann.

Vorteilhafte Ausgestaltungen der Erfindung sind in den anhängenden Patentansprüchen beschrieben.

Die Erfindung wird nachfolgend anhand von Figuren beschrieben. In den Figuren zeigen:
Figuren 1A und 1B ein erstes Ausführungsbeispiel einer Türanordnung,
Figur 2 ein zweites Ausführungsbeispiel einer Türanordnung, und
Figur 3 eine Öffnungsmechanik einer Türanordnung.

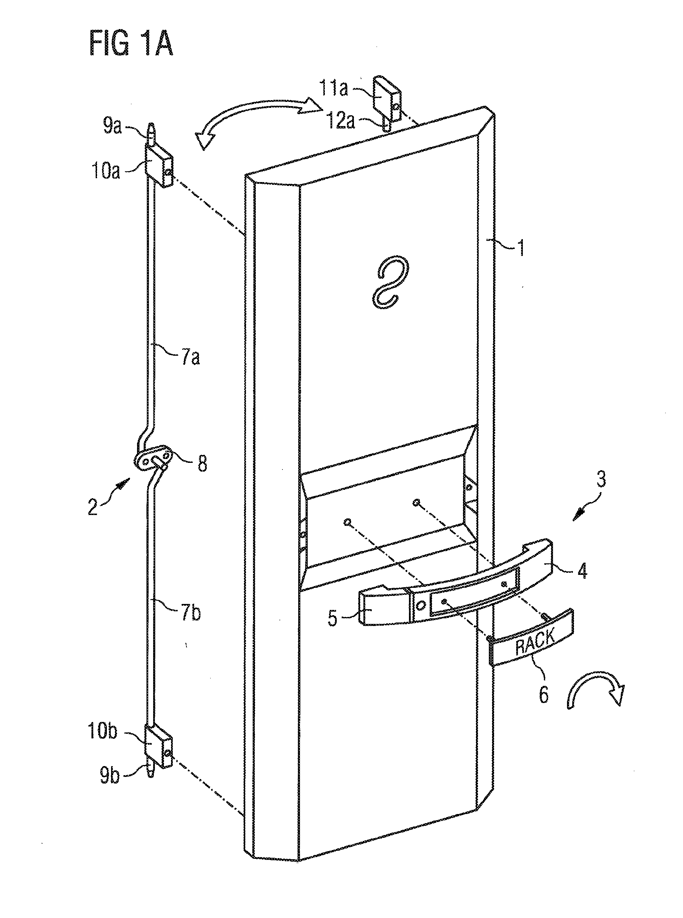

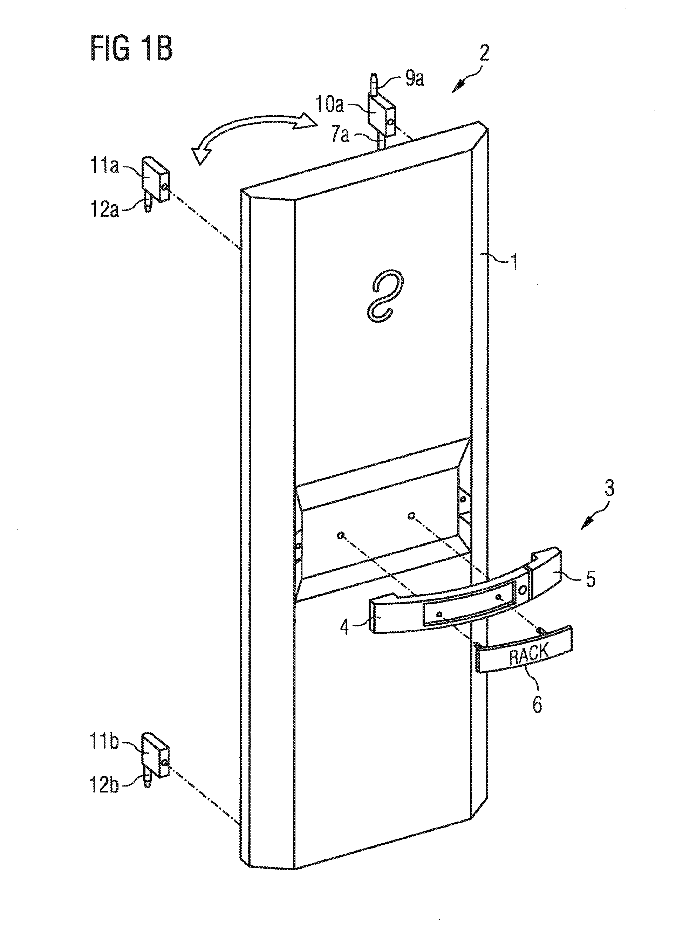

In den Figuren 1A und 1B ist ein erstes Ausführungsbeispiel einer Türanordnung für einen Geräteschrank dargestellt. Dabei zeigt die Figur 1A eine Explosionsdarstellung der Türanordnung in einer Konfiguration für einen Türanschlag auf der rechten Seite und die Figur 1B eine Explosionsdarstellung der Türanordnung mit der Anschlagsseite auf der linken Seite.

Die Türanordnung gemäß den Figuren 1A und 1B umfasst ein Türelement 1 mit einer vorbestimmten Orientierung. Dabei kann die Orientierung des Türelementes 1 entweder durch die Position und Anordnung darin aufgenommener Funktionselemente oder aber durch die Gestaltung des Türelementes 1 selbst vorgegeben sein. Im Ausführungsbeispiel ist die Orientierung des Türelements 1 beispielsweise durch eine Verzierung im oberen Teil des Türelementes 1 vorgegeben.

Die Anordnung umfasst des Weiteren ein rückseitig angeordnetes Schubstangensystem 2, das sich in der Figur 1A auf der linken Seite des Türelementes 1 befindet. Des Weiteren umfasst die Anordnung ein auf der Vorderseite des Türelementes 1 in etwa mittig angeordnetes Griffelement 3, das im dargestellten Ausführungsbeispiel aus einem feststehenden Teil 4, einem beweglichen Teil 5 und einem Verkleidungselement 6 besteht.

Der bewegliche Teil 5 ist auf der linken Seite des Griffelementes 3 angeordnet, also der Seite des Türelementes 1, an dem sich das Schubstangensystem 2 befindet. Ansonsten ist das Griffelement 3 symmetrisch ausgestaltet. Insbesondere sind die Befestigungsmittel des Griffelementes 3 zur Festlegung des Griffelementes 3 an dem Türelement 1 punktsymmetrisch bezüglich einer Drehung des Griffelementes 3 um 180° um dessen Mittelpunkt ausgestaltet, wie sie durch den Pfeil in der Figur 1A angedeutet ist. Um dabei eine Marken- oder sonstige Bezeichnung auf dem Verkleidungselementes 6 in ihrer Orientierung beibehalten zu können, kann auch das Verkleidungselement 6 relativ zu dem feststehenden Teil 4 um 180° gedreht werden.

Das Schubstangensystem 2 besteht im dargestellten Ausführungsbeispiel aus einer oberen Schubstange 7a, einer unteren Schubstange 7b und einem Kopplungselement 8, das die obere Schubstange 7a mit der unteren Schubstange 7b sowie dem beweglichen Teil 5 des Griffelements 3 koppelt. Wird der bewegliche Teil 5 des Griffelementes 3 zurückgezogen, wird das Kopplungselement 8 so gegenüber einer feststehenden Achse verdreht, dass die obere Schubstange 7a und die untere Schubstange 7b nach unten beziehungsweise nach oben bewegt werden, sodass zwei erste Bolzen 9a beziehungsweise 9b aus einem oberen Lagerbock 10a beziehungsweise einem unteren Lagerbock 10b zurückgezogen werden. Die zurückziehbaren ersten Bolzen 9a beziehungsweise 9b bilden Teil eines Verschlussmechanismus der Türanordnung. Insbesondere können sie in entsprechende Gehäuseöffnungen eines in der Figur 1A nicht dargestellten Gehäuseschranks eingreifen.

An der gegenüberliegenden, rechten Seitenkante des Türelementes 1 sind rückseitig zwei zweite Lagerböcke 11a und 11b (in der Figur 1A verdeckt) angeordnet, aus denen jeweils zweite Bolzen 12a bzw. 12b nach unten herausstehen. Die Bolzen 12a und 12b der zweiten Lagerböcke 11a und 11b bilden in dem in den Figuren 1A und 1B dargestellten Ausführungsbeispiel eine Schwenkachse für das Türelement 1.

Die Anordnung des beweglichen Teils 5 auf der linken Seite des Türelementes 1 und dessen Kopplung mit dem Kopplungselement 8 bewirkt daher beim Ziehen des beweglichen Teils 5 gleichzeitig ein Lösen der Verriegelung auf der linken Seite der Türanordnung und ein Aufschwenken des Türelements 1 um dessen Schwenkachse auf der rechten Seite.

Um die Anschlagsseite der in den Figuren 1A und 1B dargestellten Türanordnung zu vertauschen, also die Schwenkachse von der rechten Seite auf die linke Seitenkante des Türelementes 1 zu verlagern und den Schließmechanismus von der linken Seitenkante auf die rechte Seitenkante des Türelementes zu verlagern, werden im Ausführungsbeispiel die ersten Lagerböcke 10a und 10b und die zweiten Lagerböcke 11a und 11b von dem Türelement 1 gelöst und miteinander vertauscht. Beispielsweise kann eine Verschraubung oder Verrastung der Lagerböcke 10a und 10b sowie der Lagerböcke 11a und 11b gelöst werden und an der gegenüberliegenden Seitenkante des Türelementes 1 erneut befestigt werden. Vorteilhafterweise umfassen die zur Befestigung der Lagerböcke 10a und 10b sowie der Lagerböcke 11a und 11b verwendeten Befestigungsmittel wie Schraubenlöcher oder Rastnasen daher dieselbe Größe und/oder dieselbe Position.

Zusätzlich wird an das Griffelement 3 von dem Türelement 1 gelöst und um 180° gedreht, um den beweglichen Teil 5 des Griffelementes 3 von links nach rechts zu vertauschen. Das gedrehte Griffelement 3 wird dann wieder an dem Türelement 1 befestigt, beispielsweise verschraubt oder verrastet, wobei gleichzeitig der bewegliche Teil 5 in Eingriff mit dem Kopplungsteil 8 des Schubstangensystems 2 gebracht wird, das sich nun im Bereich der rechten Seitenkante befindet.

Falls die Orientierung des Verkleidungselementes 6 bewahrt werden soll, muss zusätzlich das Verkleidungselement 6 aus dem feststehenden Teil 4 des Griffelementes 3 herausgelöst und ebenfalls um 180° gedreht werden. Im Ergebnis ist die Öffnungsrichtung bzw. die Anschlagseite des Türelementes 1 vertauscht, wobei die Orientierung sowohl des Türelementes 1 selbst als auch die Orientierung des Verkleidungselementes 6 beibehalten wird.

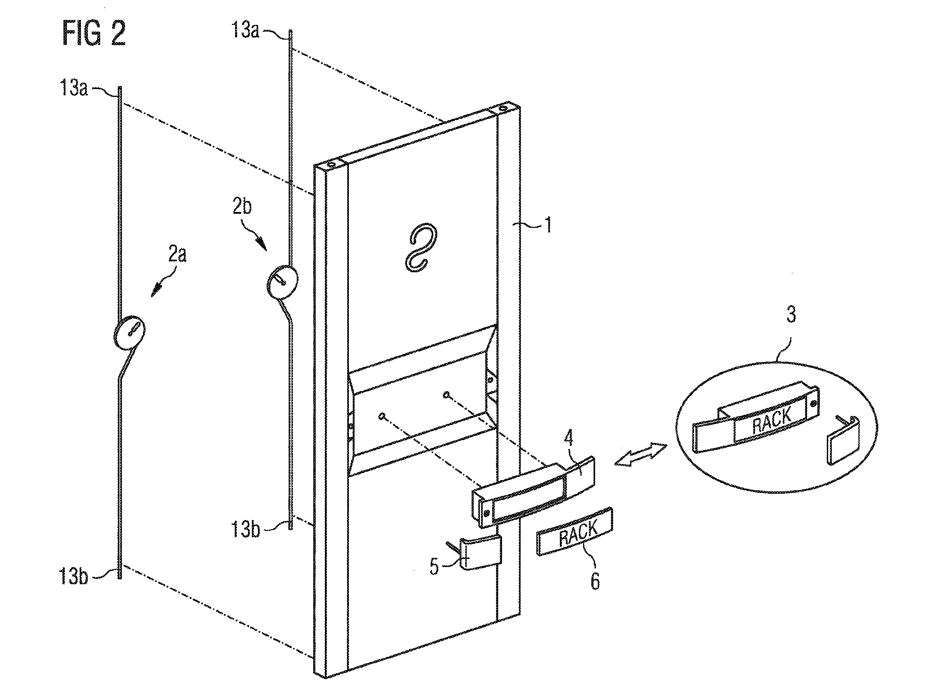

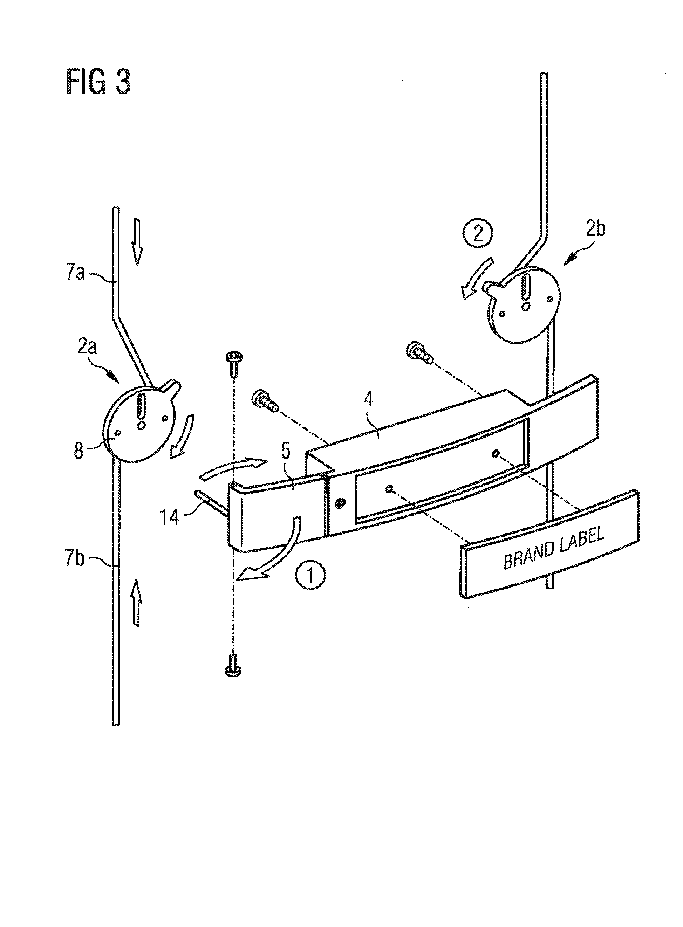

Eine zweite beispielhafte Ausgestaltung einer vorgeschlagenen Türanordnung ist in den Figuren 2 und 3 dargestellt.

Figur 2 zeigt eine Türanordnung umfassend ein Türelement 1, bei dem jeweils zwei zweiteilige Schubstangensysteme 2a und 2b im Bereich einer linken beziehungsweise rechten Kante des Türelementes 1 fest installiert sind. Auf der Vorderseite des Türelementes 1 ist ein um 180° drehbares Griffelement 3 angeordnet. Das Griffelement 3 ist im dargestellten Ausführungsbeispiel dreiteilig ausgeführt und besteht aus einem feststehenden Teil 4, einem beweglichen Teil 5 sowie einem Verkleidungselement 6.

Die Türanordnung ist weitgehend symmetrisch. Insbesondere sind Öffnungen zur Aufnahme der Schubstangensysteme 2a und 2b auf beiden Seiten des Türelements 1 und eines in den Figuren nicht dargestellten Rahmens eines Racks oder dergleichen angeordnet. Auch sämtliche Befestigungsöffnungen des Türelementes 1 sind symmetrisch angeordnet, so dass das Griffelement 3 mit allen zugehörigen Teilen jeweils um 180° gedreht montiert werden kann.

In der Figur 3 ist die Öffnungsmechanik der Türanordnung im Detail dargestellt. Insbesondere ist dort ersichtlich, dass die zweiteiligen Schubstangensysteme 2a und 2b jeweils aus einer oberen Schubstange 7a und einer unteren Schubstange 7b bestehen. Wie sich aus der Figur 2 ergibt, bilden die Enden der Schubstangen 7a und 7b jeweils einen Scharnierbolzen 13a bzw. 13b zum Schwenken des Türelementes 1 um eine linke beziehungsweise rechte Schwenkachse. Die Schubstangen 7a und 7b sind im Bereich des Griffelementes 3 durch ein drehbares Kopplungselement 8 miteinander verbunden.

Durch Drehen des Kopplungselementes 8 können die Schubstangen 7a und 7b mit den Scharnierbolzen 13a und 13b zurückgezogen werden, sodass ein Aufschwenken des Türelementes 1 um die jeweils gegenüberliegenden, nicht zurückgezogenen Scharnierbolzen 13a und 13b möglich wird. Das Kopplungselement 8 kann entweder durch Zurückziehen des beweglichen Teils 5 oder durch direktes Drehen des Kopplungselementes 8 von der Rückseite des Türelementes 1 her ausgelöst werden. Das bewegliche Teil 5 ist hierzu über einen Kopplungsbolzen 14 mit dem Kopplungselement 8 gekoppelt. Hierzu weist das Türelement 1 eine Öffnung im Bereich des Griffelementes 3 und das Kopplungselement 8 einen Schlitz auf.

Zum Drehen des Griffelementes 3 wird zunächst das Verkleidungselement 6 aus dem feststehenden Teil 4 gelöst, sodass ein Lösen einer dahinter angeordneten Schraub- oder Rastverbindung des feststehenden Teils 4 von dem Türelement 1 ermöglicht wird. Des Weiteren wird das bewegliche Teil 5 von dem Türelement 1 gelöst. Im Ausführungsbeispiel wird das bewegliche Teil 5 durch Schraub- oder Steckverbindungen an dem Türelement 1 gehalten, wobei diese Verbindungen zugleich die Schwenkachse des beweglichen Teils 5 bilden. Nach dem Lösen des feststehenden Teils 4 und des beweglichen Teils 5 werden beide Teile um 180° gedreht und wieder mit dem Türelement 1 verbunden, sodass der Kopplungsbolzen 14 des beweglichen Teils 5 mit dem Kopplungsteil 8 des gegenüberliegenden Schubstangensystems 2b in Eingriff kommt und das Öffnen der Tür entlang der gegenüberliegenden Schwenkachse ermöglicht.

Um eine eventuelle auf dem Verkleidungsteil 6 angebrachte Marken- oder sonstige Bezeichnung auch nach Drehen des feststehenden Teils 4 in der richtigen Orientierung auf dem Griffelement 3 zu behalten, muss zusätzlich das Verkleidungsteil 6 um 180° gedreht bezogen auf das feststehende Teil 4 mit dem feststehenden Teil 4 verrastet werden.

Beim Umrüsten der Anschlagseite von links nach rechts bleiben Designelemente sowohl des Türelementes 1 selber als auch des Verkleidungselementes 6 in ihrer Orientierung erhalten.

Die vorstehend beschriebene Mechanik gestattet das einfache Umrüsten der Anschlagseite des Türelementes 1 von links nach rechts beziehungsweise umgekehrt.

Des Weiteren kann das Türelement 1 gemäß dem zweiten Ausführungsbeispiel auch auf einfache Weise ausgehängt werden, in dem nach dem Öffnen des Türelementes, beispielsweise auf der linken Seite, auch die als Scharnierbolzen 13a und 13b dienenden Schubstangen 7a und 7b der rechten Seite durch Drehen des Kopplungselementes 8 von der Rückseite her zurückgezogen werden.

### Bezugszeichenliste

- 1: Türelement
- 2: Schubstangensystem
- 3: Griffelement
- 4: feststehendes Teil
- 5: bewegliches Teil
- 6: Verkleidungselement
- 7: Schubstange
- 8: Kopplungselement
- 9: erster Bolzen
- 10: erster Lagerbock
- 11: zweiter Lagerbock
- 12: zweiter Bolzen
- 13: Scharnierbolzen
- 14: Kopplungsbolzen

## Patentansprüche

1. Türanordnung für einen Geräteschrank oder dergleichen, umfassend:
- ein Türelement (1) mit einer ersten Seitenkante und einer der ersten Seitenkante gegenüberliegenden zweiten Seitenkante zum Einbau in einer vorbestimmten Orientierung,
- wenigstens zwei erste, zurückziehbare Bolzen (9, 13) im Bereich der ersten Seitenkante und wenigstens zwei zweite, eine Schwenkachse bildende Bolzen (12, 13) im Bereich der zweiten Seitenkante, wobei die ersten Bolzen (9, 13) in einem ausgefahrenen Zustand mit einer ersten Vertiefung des Geräteschrankes in Verbindung stehen, um ein Schwenken des Türelements (1) um die Schwenkachse zu verhindern und in einem zurückgezogenen Zustand aus der ersten Vertiefung heraustreten, um ein Schwenken des Türelements (1) um die Schwenkachse zu gestatten,
- wenigstens ein Griffelement (3) mit einem feststehenden Teil (4) zur Befestigung an einer Vorderseite des Türelements (1) und einem beweglichen Teil (5) zur mechanischen Kopplung mit den zwei ersten Bolzen (9, 13), wobei durch Betätigen des beweglichen Teils (5) die damit gekoppelten ersten Bolzen (9, 13) in den eingefahrenen Zustand bewegbar sind,
**dadurch gekennzeichnet, dass**
- das Türelement (1) und/oder das Griffelement (3) symmetrisch ausgestaltet sind, so dass durch Lösen, Drehen um 180 Grad und Befestigung des gedrehten Griffelements (3) Funktionselemente eines Schließmechanismus der Türanordnung von der ersten Seitenkante an die zweiten Seitenkante vertauscht werden können und umgekehrt.

2. Türanordnung nach Anspruch 1, **dadurch gekennzeichnet, dass** die zwei ersten Bolzen (9) und die zwei zweiten Bolzen (12) über Befestigungsmittel lösbar mit dem Türelement (1) verbunden sind, wobei die Befestigungsmittel so ausgestaltet sind, dass die zwei ersten Bolzen (9) mit den zwei zweiten Bolzen (12) vertauschbar sind, um einen Wechsel der Schwenkachse von der ersten Seitenkante an die zweite Seitenkante zu bewirken.

3. Türanordnung nach Anspruch 1, **dadurch gekennzeichnet, dass** die ersten Bolzen als zurückziehbare erste Scharnierbolzen (13) ausgestaltet sind, die in dem ausgefahrenen Zustand eine Schwenkachse im Bereich der ersten Seitenkante bilden, und die zweiten Bolzen als zurückziehbare zweite Scharnierbolzen (13) ausgestaltet sind, die in einem ausgefahrenen Zustand mit einer zweiten Vertiefung des Geräteschrankes in Verbindung stehen, um ein Schwenken des Türelements (1) um die Schwenkachse der ersten Seitenkante zu verhindern, und in einem zurückgezogenen Zustand aus der zweiten Vertiefung heraustreten, um ein Schwenken des Türelements (1) um die Schwenkachse der ersten Seitenkante zu gestatten, wobei der bewegliche Teil (5) des wenigstens einen Griffelements (3) zur mechanischen Kopplung mit den zwei ersten Scharnierbolzen (13) oder den zwei zweiten Scharnierbolzen (13) eingerichtet ist und wobei durch Betätigen des beweglichen Teils (5) die jeweils damit gekoppelten Scharnierbolzen (13) in den eingefahrenen Zustand bewegbar sind.

4. Türanordnung nach Anspruch 3, **dadurch gekennzeichnet, dass** eine linke Kante des Türelements (1) die erste Seitenkante bildet und eine rechte Kante des Türelements (1) die zweite Seitenkante bildet, so dass durch das Lösen, Drehen um 180 Grad und Befestigung des gedrehten Griffelements (3) die Anschlagseite der Türanordnung von links nach rechts vertauscht werden kann.

5. Türanordnung nach Anspruch 3 oder 4, **dadurch gekennzeichnet, dass** die ersten und die zweiten Scharnierbolzen (13) jeweils als Teil einer Schubstange (7) ausgeführt sind, wobei die Schubstangen (7) im Bereich der ersten und der zweiten Seitenkante über jeweils wenigstens ein drehbares Kopplungselement (8) miteinander verbunden sind.

6. Türanordnung nach Anspruch 5, **dadurch gekennzeichnet, dass** die Kopplungselemente (8) von einer Rückseite des Türelementes (1) her zugänglich sind und ein Zurückziehen der die Schwenkachse bildenden Schubstangen (7) ermöglichen, so dass das geöffnete Türelement (1) aus dem Geräteschrank ausgehängt werden kann.

7. Türanordnung nach einem der Ansprüche 1 bis 6, **dadurch gekennzeichnet, dass** das Griffelement (3) wenigstens ein Verkleidungselement (6) mit der vorbestimmten Orientierung umfasst, wobei das Verkleidungselement (6) mit dem feststehenden Teil (4) des Griffelementes (3) verrastbar ist, so dass beim Ändern der Anschlagseite durch Herauslösen, Drehen um 180 Grad bezogen auf das feststehende Teil (4) und Verrasten des gedrehten Verkleidungselementes (6) die vorbestimmte Orientierung des Verkleidungselements (6) beibehalten werden kann.

8. Türanordnung nach einem der Ansprüche 1 bis 7, **dadurch gekennzeichnet, dass** das Griffelement (3) mit dem Türelement (1) verrastbar oder verschraubar ist.

9. Türanordnung nach den Ansprüchen 7 und 8, **dadurch gekennzeichnet, dass** die Verrastung bzw. die Verschraubung des Griffelements (3) nach Lösen des Verkleidungselementes (6) lösbar sind, so dass ein Drehen des Griffelements (3) ohne Aushängen des Türelementes (1) möglich ist.

10. Verfahren zum Ändern einer Anschlagseite einer Türanordnung umfassend ein Türelement (1) zum Einbau in einer vorbestimmten Orientierung mit einer ersten Seitenkante und einer der ersten Seitenkante gegenüberliegenden zweiten Seitenkante, wenigstens einen durch zwei erste, zurückziehbare Bolzen (9, 13) gebildeten Verschlussmechanismus im Bereich der ersten Seitenkante und wenigstens eine durch zwei zweite Bolzen (12, 13) gebildete Schwenkachse im Bereich der zweiten Seitenkante sowie wenigstens ein Griffelement (3) mit einem feststehenden Teil (4) zur Befestigung an einer Vorderseite des Türelements (1) und einem beweglichen Teil (5), das mit den zwei ersten Bolzen (9, 13) zum Zurückziehen der zwei ersten Bolzen (9, 13) mechanisch gekoppelt ist, **gekennzeichnet durch** die Schritte:
- Lösen des Griffelements (3) von dem Türelement (1), wobei die mechanische Kopplung mit den zwei ersten zurückziehbaren Bolzen (9, 13) gelöst wird,
- Drehen der Griffelements (3) um 180 Grad bezogen auf das Türelement (1), so dass der bewegliche Teil (5) von der ersten Seitenkante zu einer zweiten Seitenkante vertauscht wird, und
- Befestigen des gedrehten Griffelements (3) an dem Türelement (1).

11. Verfahren nach Anspruch 10, mit den zusätzlichen Schritten:
- Lösen der zwei ersten Bolzen (9) und der zwei zweiten Bolzen (12) von dem Türelement (1),
- Vertauschen der zwei ersten Bolzen (9) mit den zwei zweiten Bolzen (12), und
- Befestigen der vertauschten zwei ersten Bolzen (9) und der zwei zweiten Bolzen (12), so dass die zurückziehbaren ersten Bolzen (9) im Bereich der zweiten Seitenkante angeordent sind und die zwei Bolzen (12) im Bereich der ersten Seitenkante angeordnet sind und im Schritt des Befestigen des gedrehten Griffelements (3) der bewegliche Teil (5) des Griffelements (3) zum Zurückziehen der ersten Bolzen (9) mit den ersten, zurückziehbaren Bolzen (9) im Bereich der zweiten Seitenkante mechanisch gekoppelt wird.

12. Verfahren nach Anspruch 10, **dadurch gekennzeichnet, dass** die zwei ersten und die zwei zweiten Bolzen als zurückziehbare Scharnierbolzen (13) ausgestaltet sind, wobei im Schritt des Befestigen des gedrehten Griffelements (3) der bewegliche Teil (5) des Griffelements (3) zum Zurückziehen der zweiten Scharnierbolzen (13) mit den zweiten, zurückziehbaren Scharnierbolzen (13) mechanisch gekoppelt wird.

## Claims

1. Door assembly for an instrument cabinet or similar, including:
- a door element (1) having a first side edge and a second side edge that is opposite the first side edge, for installation in a predetermined orientation,
- at least two first withdrawable pins (9, 13) in the region of the first side edge and at least two second pins (12, 13), which form a pivot axis, in the region of the second side edge, wherein, in an extended condition, the first pins (9, 13) are in communication with a first depression in the instrument cabinet in order to prevent the door element (1) pivoting about the pivot axis and, in a withdrawn condition, extend out of the first depression in order to permit the door element (1) to pivot about the pivot axis,
- at least one handle element (3) having a fixed part (4) for securing to a front side of the door element (1) and a movable part (5) for mechanically coupling to the two first pins (9, 13), wherein actuation of the movable part (5) allows the first pins (9, 13), which are coupled thereto, to move into the retracted condition, **characterized in that**
- the door element (1) and/or the handle element (3) are of symmetrical construction, with the result that releasing the handle element (3), turning it through 180 degrees and securing the turned handle element (3) enables functional elements of a closing mechanism of the door assembly to be switched from the first side edge to the second side edge and vice versa.

2. Door assembly according to Claim 1, **characterized in that** the two first pins (9) and the two second pins (12) are releasably connected to the door element (1) by way of securing means, wherein the securing means are constructed such that the two first pins (9) and the two second pins (12) may be switched with one another, in order to perform a change of the pivot axis from the first side edge to the second side edge.

3. Door assembly according to Claim 1, **characterized in that** the first pins are constructed as withdrawable fist hinge pins (13), which in the extended condition form a pivot axis in the region of the first side edge, and the second pins are constructed as withdrawable second hinge pins (13), which in an extended condition are in communication with a second depression in the instrument cabinet in order to prevent the door element (1) pivoting about the pivot axis of the first side edge and, in a withdrawn condition, extend out of the second depression in order to permit the door element (1) to pivot about the pivot axis of the first side edge, wherein the movable part (5) of the at least one handle element (3) is set up for mechanical coupling to the two first hinge pins (13) or the two second hinge pins (13), and wherein actuation of the movable part (5) allows the hinge pins (13), which are each coupled thereto, to move into the retracted condition.

4. Door assembly according to Claim 3, **characterized in that** a left edge of the door element (1) forms the first side edge and a right edge of the door element (1) forms the second side edge, with the result that releasing the handle element (3), turning it through 180 degrees and securing the turned handle element (3) enables the hinge side of the door assembly to be switched from left to right.

5. Door assembly according to Claim 3 or 4, **characterized in that** the first and the second hinge pins (13) are each constructed as part of a pushrod (7), wherein the pushrods (7) are connected to one another in the region of the first and the second side edge by way of in each case at least one rotatable coupling element (8).

6. Door assembly according to Claim 5, **characterized in that** the coupling elements (8) are accessible from a rear side of the door element (1) and make it possible to withdraw the pushrods (7) that form the pivot axis, with the result that the opened door element (1) may be unhinged from the instrument cabinet.

7. Door assembly according to one of Claims 1 to 6, **characterized in that** the handle element (3) includes at least one cladding element (6) having the predetermined orientation, wherein the cladding element (6) may be latched to the fixed part (4) of the handle element (3), with the result that when the hinge side is changed by releasing the cladding element (6), turning it through 180 degrees in relation to the fixed part (4) and latching the turned cladding element (6) the predetermined orientation of the cladding element (6) may be maintained.

8. Door assembly according to one of Claims 1 to 7; **characterized in that** the handle element (3) may be latched or screwed to the door element (1).

9. Door assembly according to Claims 7 and 8, **characterized in that** the latch connection or screw connection of the handle element (3) may be released after releasing the cladding element (6), with the result that it is possible to turn the handle element (3) without unhinging the door element (1).

10. Method for changing a hinge side of a door arrangement, including a door element (1) for installation in a predetermined orientation, having a first side edge and a second side edge that is opposite the first side edge, at least one closing mechanism, which is formed by two first withdrawable pins (9, 13), in the region of the first side edge and at least one pivot axis, which is formed by two second pins (12, 13), in the region of the second side edge and at least one handle element (3) having a fixed part (4) for securing to a front side of the door element (1) and a movable part (5), which is mechanically coupled to the two first pins (9, 13), for withdrawing the two first pins (9, 13), **characterized by** the following steps:
- releasing the handle element (3) from the door element (1), wherein the mechanical coupling to the two first withdrawable pins (9, 13) is released,
- turning the handle element (3) through 180 degrees in relation to the door element (1), with the result that the movable part (5) is switched from the first side edge to a second side edge, and
- securing the turned handle element (3) to the door element (1).

11. Method according to Claim 10, having the following additional steps:
- releasing the two first pins (9) and the two second pins (12) from the door element (1),
- switching the two first pins (9) and the two second pins (12) with one another, and
- securing the switched two first pins (9) and the two second pins (12), with the result that the withdrawable first pins (9) are arranged in the region of the second side edge and the two pins (12) are arranged in the region of the first side edge, and in the step of securing the turned handle element (3) the movable part (5) of the handle element (3), for withdrawing the first pins (9), is mechanically coupled to the first withdrawable pins (9) in the region of the second side edge.

12. Method according to Claim 10, **characterized in that** the two first and the two second pins are constructed as withdrawable hinge pins (13), wherein, in the step of securing the turned handle element (3), the movable part (5) of the handle element (3), for withdrawing the second hinge pins (13), is mechanically coupled to the second withdrawable hinge pins (13).

## Revendications

1. Agencement de porte pour une armoire d'appareil ou similaire, comprenant :
- un élément de porte (1) avec un premier bord latéral et un deuxième bord latéral opposé au premier bord latéral pour l'installation dans une orientation prédéterminée,
- au moins deux premiers boulons rétractables (9, 13) dans la région du premier bord latéral et au moins deux deuxièmes boulons (12, 13) formant un axe de pivotement dans la région du deuxième bord latéral, les premiers boulons (9, 13), dans un état sorti, étant en liaison avec un premier renfoncement de l'armoire d'appareil, afin d'empêcher un pivotement de l'élément de porte (1) autour de l'axe de pivotement et, dans un état rentré, étant ressortis du premier renfoncement, afin de permettre un pivotement de l'élément de porte (1) autour de l'axe de pivotement,
- au moins un élément de préhension (3) avec une partie fixe (4) pour la fixation à un côté avant de l'élément de porte (1) et une partie mobile (5) pour l'accouplement mécanique aux deux premiers boulons (9, 13), par actionnement de la partie mobile (5), les premiers boulons accouplés (9, 13) avec celle-ci pouvant être déplacés dans l'état rentré,
**caractérisé en ce que**
- l'élément de porte (1) et/ou l'élément de préhension (3) sont configurés de manière symétrique de sorte que par desserrage, rotation de 180 degrés et fixation de l'élément de préhension tourné (3), des éléments fonctionnels d'un mécanisme de fermeture de l'agencement de porte puissent être permutés du premier bord latéral au deuxième bord latéral et inversement.

2. Agencement de porte selon la revendication 1, **caractérisé en ce que** les deux premiers boulons (9) et les deux deuxièmes boulons (12) sont connectés de manière détachable à l'élément de porte (1) par le biais de moyens de fixation, les moyens de fixation étant configurés de telle sorte que les deux premiers boulons (9) puissent être permutés avec les deux deuxièmes boulons (12) afin de provoquer un changement de l'axe de pivotement du premier bord latéral au deuxième bord latéral.

3. Agencement de porte selon la revendication 1, **caractérisé en ce que** les premiers boulons sont configurés sous forme de premiers boulons de charnière rétractables (13) qui, dans l'état sorti, forment un axe de pivotement dans la région du premier bord latéral, et les deuxièmes boulons sont configurés sous forme de deuxièmes boulons de charnière rétractables (13) qui, dans un état sorti, sont en liaison avec un deuxième renfoncement de l'armoire d'appareil, afin d'empêcher un pivotement de l'élément de porte (1) autour de l'axe de pivotement du premier bord latéral, et, dans un état rentré, sont ressortis du deuxième renfoncement, afin de permettre un pivotement de l'élément de porte (1) autour de l'axe de pivotement du premier bord latéral, la partie mobile (5) de l'au moins un élément de préhension (3) étant prévue pour l'accouplement mécanique aux deux premiers boulons de charnière (13) ou aux deux deuxièmes boulons de charnière (13) et, par actionnement de la partie mobile (5), les boulons de charnière (13) respectivement accouplés à celle-ci pouvant être déplacés dans l'état rentré.

4. Agencement de porte selon la revendication 3, **caractérisé en ce qu'**un bord gauche de l'élément de porte (1) forme le premier bord latéral et un bord droit de l'élément de porte (1) forme le deuxième bord latéral, de telle sorte que par desserrage, rotation de 180 degrés et fixation de l'élément de préhension tourné (3), le côté de butée de l'agencement de porte puisse être permuté de la gauche vers la droite.

5. Agencement de porte selon la revendication 3 ou 4, **caractérisé en ce que** les premiers et deuxièmes boulons de charnière (13) sont à chaque fois réalisés sous forme de partie d'une tige poussoir (7), les tiges poussoir (7) étant connectées l'une à l'autre dans la région du premier et du deuxième bord latéral par le biais d'au moins un élément d'accouplement rotatif respectif (8).

6. Agencement de porte selon la revendication 5, **caractérisé en ce que** les éléments d'accouplement (8) sont accessibles depuis un côté arrière de l'élément de porte (1) et permettent une rétraction des tiges poussoir (7) formant l'axe de pivotement, de telle sorte que l'élément de porte ouvert (1) puisse être décroché de l'armoire d'appareil.

7. Agencement de porte selon l'une quelconque des revendications 1 à 6, **caractérisé en ce que** l'élément de préhension (3) comprend au moins un élément d'habillage (6) dans l'orientation prédéterminée, l'élément d'habillage (6) pouvant être encliqueté avec la partie fixe (4) de l'élément de préhension (3) de telle sorte que lors du changement du côté de butée par desserrage, rotation de 180 degrés par rapport à la partie fixe (4) et encliquetage de l'élément d'habillage tourné (6), l'orientation prédéterminée de l'élément d'habillage (6) puisse être conservée.

8. Agencement de porte selon l'une quelconque des revendications 1 à 7, **caractérisé en ce que** l'élément de préhension (3) peut être encliqueté ou vissé avec l'élément de porte (1).

9. Agencement de porte selon les revendications 7 et 8, **caractérisé en ce que** l'encliquetage ou le vissage de l'élément de préhension (3) peuvent être desserrés après le desserrage de l'élément d'habillage (6), de telle sorte qu'une rotation de l'élément de préhension (3) soit possible sans décrocher l'élément de porte (1).

10. Procédé pour changer un côté de butée d'un agencement de porte, comprenant un élément de porte (1) pour l'installation dans une orientation prédéterminée avec un premier bord latéral et un deuxième bord latéral opposé au premier bord latéral, au moins un mécanisme de fermeture formé par deux premiers boulons rétractables (9, 13) dans la région du premier bord latéral et au moins un axe de pivotement formé par deux deuxièmes boulons (12, 13) dans la région du deuxième bord latéral ainsi qu'au moins un élément de préhension (3) avec une partie fixe (4) pour la fixation à un côté avant de l'élément de porte (1) et une partie mobile (5) qui est accouplée mécaniquement aux deux premiers boulons (9, 13) pour rétracter les deux premiers boulons (9, 13), **caractérisé par** les étapes suivantes :
- desserrage de l'élément de préhension (3) de l'élément de porte (1), l'accouplement mécanique étant desserré avec les deux premiers boulons rétractables (9, 13),
- rotation de l'élément de préhension (3) de 180 degrés par rapport à l'élément de porte (1), de telle sorte que la partie mobile (5) soit permutée du premier bord latéral à un deuxième bord latéral, et
- fixation de l'élément de préhension tourné (3) sur l'élément de porte (1).

11. Procédé selon la revendication 10, comprenant les étapes supplémentaires suivantes :
- desserrage des deux premiers boulons (9) et des deux deuxièmes boulons (12) de l'élément de porte (1),
- permutation des deux premiers boulons (9) avec les deux deuxièmes boulons (12), et
- fixation des deux premiers boulons permutés (9) et des deux deuxièmes boulons (12), de telle sorte que les premiers boulons rétractables (9) soient disposés dans la région du deuxième bord latéral et que les deux boulons (12) soient disposés dans la région du premier bord latéral et, qu'au cours de l'étape de fixation de l'élément de préhension tourné (3), la partie mobile (5) de l'élément de préhension (3) soit accouplée mécaniquement aux premiers boulons rétractables (9) dans la région du deuxième bord latéral, pour rétracter les premiers boulons (9).

12. Procédé selon la revendication 10, **caractérisé en ce que** les deux premiers et les deux deuxièmes boulons sont configurés sous forme de boulons de charnière rétractables (13), la partie mobile (5) de l'élément de préhension (3), à l'étape de fixation de l'élément de préhension tourné (3), étant accouplée mécaniquement aux deuxièmes boulons de charnière rétractables (13) pour rétracter les deuxièmes boulons de charnière (13).
